# DEMANDE DE BREVET EUROPEEN

(11) **EP 4 636 180 A1**
(43) Date de publication de la demande: **22.10.2025**
(21) Numéro de dépôt: 25171153.7
(22) Date de dépôt: 17.04.2025
(51) Int. Cl.: E03D 1/36, F16K 17/04, F16K 17/06, F16K 21/12

(54) **ENSEMBLE DE TEMPORISATION D'ALIMENTATION EN EAU POUR RÉSERVOIR DE CHASSE D'EAU D'UN APPAREIL SANITAIRE**

(30) Priorité: 19.04.2024 FR 2404118; 06.02.2025 FR 2501227
(71) Demandeur: Simon, Fabien, 97421 Saint-Louis (FR)
(72) Inventeur: Simon, Fabien, 97421 Saint-Louis (FR)
(74) Mandataire: Derriennic, Tangui Jean

(57) **Abrégé**

L'invention concerne un ensemble de temporisation d'alimentation en eau pour réservoir de chasse d'eau d'un appareil sanitaire, comprenant une canalisation d'alimentation en eau propre reliée à un robinet d'arrêt (15) alimentant et un réservoir de chasse d'eau (16) d'un appareil sanitaire comportant un mécanisme d'activation de la chasse d'eau. Il comporte : un dispositif de temporisation d'alimentation en eau positionné entre ledit robinet d'arrêt et ledit réservoir de chasse d'eau, ledit dispositif de temporisation d'alimentation en eau comporte un élément configuré pour différer l'ouverture de l'alimentation en eau propre après activation de la chasse d'eau.

## Description

### Domaine technique de l'invention

La présente invention concerne un ensemble de temporisation d'alimentation en eau pour réservoir de chasse d'eau d'un appareil sanitaire.

Le domaine est les dispositifs de gestion et de contrôle de l'alimentation en eau pour les équipements sanitaires, en particulier les réservoirs de chasse d'eau des toilettes. Il s'agit du secteur de la plomberie et des systèmes hydrauliques visant à optimiser la consommation d'eau en différant l'ouverture de l'alimentation après l'activation de la chasse d'eau. Elle relève des technologies de réduction du gaspillage d'eau et d'amélioration de l'efficacité des installations sanitaires.

### Technique antérieure

Typiquement, un appareil sanitaire équipé d'un mécanisme de chasse d'eau comprend un réservoir conçu pour stocker l'eau nécessaire à l'évacuation des déchets. Ce réservoir est alimenté par une entrée d'eau contrôlée par un robinet ou une vanne d'admission, qui permet son remplissage après chaque utilisation. Une vanne de sortie d'eau est également prévue pour libérer l'eau accumulée dans le réservoir et ainsi provoquer la chasse d'eau.

Un dispositif de commande de la chasse d'eau est installé dans le réservoir afin d'assurer un fonctionnement automatique du remplissage. Ce dispositif intègre généralement un flotteur, qui est relié mécaniquement ou hydrauliquement au robinet d'entrée d'eau. Le flotteur joue un rôle essentiel dans la régulation du niveau d'eau : lorsque l'eau atteint un niveau prédéfini, le flotteur actionne le robinet d'entrée pour stopper l'arrivée d'eau.

Lorsqu'un utilisateur déclenche la chasse d'eau, la vanne de sortie s'ouvre, permettant à l'eau stockée dans le réservoir de s'évacuer. En conséquence, le niveau d'eau dans le réservoir diminue progressivement, entraînant la descente du flotteur. Dès que le flotteur descend sous un seuil donné, il libère le mécanisme du robinet d'entrée, ce qui provoque l'ouverture de ce dernier et le début du remplissage du réservoir. Le cycle se poursuit jusqu'à ce que le flotteur atteigne de nouveau son niveau haut, refermant ainsi le robinet d'entrée et stoppant l'arrivée d'eau.

L'un des inconvénients majeurs de ce type de dispositif réside dans le fait que le robinet d'entrée et la vanne de sortie fonctionnent simultanément pendant une partie du cycle. En effet, dès le déclenchement de la chasse d'eau, le flotteur commence à descendre, ce qui ouvre immédiatement le robinet d'entrée d'eau. Cela signifie que l'eau commence à affluer dans le réservoir alors même que l'eau de chasse s'écoule encore par la vanne de sortie. Une telle configuration entraîne un gaspillage d'eau, car une quantité supplémentaire d'eau entre dans le réservoir sans être immédiatement utile pour l'évacuation. Cette consommation excessive d'eau réduit l'efficacité globale du dispositif et représente une faiblesse importante des appareils sanitaires classiques.

Il existe plusieurs inconvénients aux solutions actuelles. Dès le déclenchement de la chasse d'eau, l'eau commence immédiatement à entrer dans le réservoir, entraînant une consommation excessive d'eau avant même la fin de l'évacuation. Le système ne permet pas de retarder l'alimentation en eau du réservoir de manière optimisée, ce qui ne réduit pas significativement le gaspillage d'eau.

L'intégration et l'entretien du système existant nécessitent des composants spécifiques et une configuration plus élaborée. Certains dispositifs sont conçus principalement pour des modèles spécifiques de chasses d'eau, ce qui limite son adaptabilité à d'autres installations sanitaires.

Certains documents de l'art antérieur proposent également des systèmes permettant de contrôler l'arrivée d'eau en fonction du niveau du réservoir. On connaît par exemple le document de publication FR2942815. La solution est intégrée au robinet flotteur avec bac additionnel pour retarder l'alimentation en eau, ce qui impose le remplacement de celui-ci pour obtenir l'économie.

### Présentation de l'invention

La présente invention vise à remédier à ces inconvénients avec une approche totalement novatrice.

L'invention a pour objectif de fournir un système plus efficace, adaptable et permettant de différer l'entrée d'eau afin de réduire la consommation inutile.

Plus précisément, l'invention vise à limiter ou supprimer le chevauchement de l'ouverture du robinet d'entrée et de la vanne de sortie du réservoir afin d'éviter le gaspillage d'eau lors de l'évacuation.

Ces objectifs, ainsi que d'autres qui apparaîtront par la suite, sont atteints, à l'aide d'un ensemble de temporisation d'alimentation en eau pour réservoir de chasse d'eau d'un appareil sanitaire, comprenant une canalisation d'alimentation en eau propre reliée à un robinet d'arrêt alimentant un réservoir de chasse d'eau d'un appareil sanitaire comportant un mécanisme d'activation de la chasse d'eau, remarquable en ce qu'il comporte :
un dispositif de temporisation d'alimentation en eau positionné entre ledit robinet d'arrêt et ledit réservoir de chasse d'eau, ledit dispositif de temporisation d'alimentation en eau comporte un élément configuré pour différer l'ouverture de l'alimentation en eau propre après activation de la chasse d'eau.

L'ensemble de temporisation d'alimentation en eau est installé à l'extérieur de la cuve du réservoir de chasse d'eau, ce qui permet de faciliter son installation ainsi que son entretien en offrant un accès direct au dispositif sans nécessiter le démontage de la cuve. Cet emplacement extérieur simplifie également d'éventuelles interventions de maintenance ou de remplacement. Toutefois, dans une variante de réalisation, l'ensemble peut être intégré à l'intérieur du réservoir de chasse d'eau, offrant ainsi une solution plus compacte et discrète, tout en conservant son fonctionnement de temporisation.

Grâce à ces dispositions, l'un des principaux avantages de l'invention réside dans sa capacité à différer l'ouverture de l'alimentation en eau après l'activation de la chasse d'eau. Contrairement aux systèmes classiques où l'eau commence immédiatement à remplir le réservoir dès le début de la chasse, le dispositif de temporisation empêche ce remplissage prématuré. Cela permet d'éviter l'écoulement simultané de l'eau d'alimentation et de l'eau d'évacuation, réduisant ainsi les pertes inutiles et contribuant à une gestion plus efficace des ressources hydriques.

Grâce à l'élément de temporisation intégré au dispositif, l'alimentation en eau ne s'ouvre qu'une fois l'évacuation de la chasse terminée. Cette synchronisation optimise l'écoulement et évite toute interférence entre l'arrivée et la sortie d'eau. Cette caractéristique permet de garantir un remplissage plus efficace du réservoir et d'éviter une éventuelle perturbation dans le débit d'eau, notamment en cas de variations de pression dans le réseau d'alimentation.

Le dispositif de temporisation d'alimentation en eau est conçu pour être positionné directement entre le robinet d'arrêt et le réservoir de chasse d'eau, ce qui facilite son intégration aux systèmes existants. Sa compatibilité avec les infrastructures sanitaires standards permet son installation sans nécessiter de modifications majeures, ce qui en fait une solution aisément adoptable pour les nouvelles constructions comme pour les rénovations.

En empêchant le déclenchement immédiat du remplissage du réservoir, l'invention réduit l'usure prématurée des composants du mécanisme de chasse d'eau, tels que le flotteur et le robinet d'entrée. En diminuant la sollicitation simultanée de ces éléments, elle contribue à prolonger leur durée de vie et à limiter les risques de dysfonctionnement, réduisant ainsi les besoins en maintenance et en remplacement des pièces.

L'invention s'inscrit dans une démarche de gestion durable des ressources en eau en permettant d'économiser plusieurs décilitres d'eau à chaque chasse. Cette réduction de la consommation est particulièrement pertinente dans un contexte de sensibilisation à la préservation de l'eau et répond aux exigences croissantes en matière d'éco-conception des équipements sanitaires.

L'ajout d'un dispositif de temporisation d'alimentation en eau entre le robinet d'arrêt et le réservoir de chasse d'eau constitue une avancée technique qui n'est pas présente dans les systèmes conventionnels. Cette caractéristique distinctive permet à l'invention de se démarquer des solutions existantes, en apportant une réponse efficace à la problématique du gaspillage d'eau.

Grâce à ces différents avantages, l'ensemble de temporisation d'alimentation en eau proposé représente une amélioration significative des dispositifs de chasse d'eau traditionnels, en optimisant leur fonctionnement tout en garantissant une consommation d'eau plus responsable.

L'invention est avantageusement mise en œuvre selon les modes de réalisation et les variantes exposées ci-après, lesquelles sont à considérer individuellement ou selon toute combinaison techniquement opérante.

Dans un mode de réalisation, ledit dispositif de temporisation d'alimentation en eau comporte un corps cylindrique avec un filetage mâle et un filetage femelle à chaque extrémité, une des extrémités comporte une entrée d'eau de canalisation d'eau propre et l'autre extrémité est une sortie d'eau reliée à l'eau du robinet d'arrêt.

Dans un mode de réalisation, ledit corps cylindrique est un corps fileté, le filetage mâle est un raccord d'entrée fileté, le filetage femelle est un raccord de sortie fileté.

Dans une variante, le filetage femelle est un raccord d'entrée fileté, le filetage mâle est un raccord de sortie fileté.

Dans un mode de réalisation, ledit dispositif de temporisation d'alimentation en eau comporte au moins une rondelle perforée configurée pour réduire la vitesse de l'eau introduite dans ledit dispositif.

Cette caractéristique permet d'apporter un contrôle précis du débit d'eau dès son entrée, ce qui constitue une amélioration notable par rapport aux dispositifs traditionnels qui ne disposent pas de moyens spécifiques de régulation de la vitesse d'écoulement en l'amont du circuit principal d'alimentation.

L'intégration d'une rondelle perforée dans le dispositif de temporisation d'alimentation en eau permet d'obtenir une réduction progressive de la pression de l'eau avant son passage dans les composants internes du dispositif. Contrairement aux systèmes existants où l'eau s'écoule librement dès l'ouverture du robinet d'entrée, la disposition de la rondelle perforée engendre une dissipation contrôlée de l'énergie cinétique de l'eau, ce qui contribue à une régulation plus efficace du temps de réponse du dispositif.

Un avantage essentiel de cette conception est qu'elle évite les à-coups hydrauliques et les variations brusques de pression qui pourraient nuire à la stabilité du dispositif et à sa durabilité. En effet, dans les systèmes de chasse d'eau classiques, l'afflux immédiat d'eau sous pression entraîne un déclenchement rapide des mécanismes internes, compromettant ainsi l'efficacité du retardement souhaité. Grâce à la rondelle perforée, la montée en pression dans la chambre du dispositif est plus progressive, ce qui assure un fonctionnement fluide et prévisible.

Enfin, la mise en œuvre d'une telle rondelle perforée dans le dispositif de temporisation offre une solution simple, robuste et peu coûteuse à produire, sans nécessiter de modifications complexes des installations existantes. Contrairement aux solutions électroniques ou mécaniques avancées qui impliquent des coûts élevés et une maintenance régulière, cette solution passive assure un effet retardateur fiable sans nécessiter d'intervention supplémentaire après son installation.

L'ensemble de ces avantages démontre que l'utilisation d'une rondelle perforée pour réduire la vitesse de l'eau constitue une caractéristique technique nouvelle et inventive, apportant une amélioration significative en termes de gestion de l'alimentation en eau dans les appareils sanitaires.

Dans un mode de réalisation, une pluralité de rondelles perforées adjacentes étant positionnées les unes à côté des autres, chaque rondelle perforée comporte une pluralité de trous, chaque trou d'une rondelle perforé n'étant pas aligné avec chaque trou de la rondelle adjacente.

Dans un mode de réalisation, ledit dispositif de temporisation d'alimentation en eau comporte une soupape calibrée configurée pour réduire le débit d'eau traversant ledit dispositif ; la soupape calibrée est centrée par rapport à l'axe longitudinal dudit dispositif de temporisation d'alimentation en eau.

La présence de la soupape calibrée permet un contrôle précis du débit d'eau pénétrant dans le dispositif. Contrairement aux systèmes conventionnels où l'eau s'écoule immédiatement et sans restriction, la soupape calibrée limite l'afflux d'eau à une très faible quantité, retardant ainsi la montée en pression du fluide dans le mécanisme. Cette temporisation permet de différer l'ouverture du circuit principal d'alimentation en eau, évitant ainsi une consommation inutile d'eau dès l'activation de la chasse.

Cette configuration améliore la gestion du remplissage du réservoir de chasse d'eau. Grâce à la restriction imposée par la soupape calibrée, l'eau introduite dans le système agit progressivement sur les éléments internes du dispositif, notamment le piston et le clapet. Ce fonctionnement différé garantit que l'eau n'est délivrée dans le réservoir qu'après un laps de temps suffisant, évitant ainsi le chevauchement de l'ouverture du robinet d'entrée et de la vanne de sortie. Cela permet d'optimiser la consommation d'eau et d'éviter le gaspillage constaté dans les dispositifs classiques.

Par ailleurs, l'intégration d'une soupape calibrée confère au dispositif une grande robustesse et une meilleure fiabilité en termes de régulation du flux. L'écoulement réduit et maîtrisé de l'eau diminue l'usure des composants mécaniques du dispositif, en particulier le piston et le clapet, prolongeant ainsi la durée de vie du système. Cette caractéristique assure un fonctionnement stable et reproductible, même après un grand nombre de cycles d'utilisation.

Dans un mode de réalisation, ledit dispositif de temporisation d'alimentation en eau comporte un bouton poussoir ayant une position de fermeture configurée pour bloquer le passage de l'eau et une position d'ouverture configurée pour laisser passer le passage de l'eau. Ainsi, lorsque le bouton est en position intermédiaire, le débit d'eau est limité. En position de fermeture l'eau est bloquée, en position d'ouverture l'eau passe.

Lorsque le bouton poussoir est utilisé, le robinet d'arrêt est remplacé. Le dispositif de temporisation d'alimentation en eau est directement relié à la canalisation d'alimentation en eau propre.

Dans un mode de réalisation, ledit dispositif de temporisation d'alimentation en eau comporte un piston actionné par la pression de l'eau et configuré pour réduire le débit d'eau traversant ledit dispositif, ledit piston ayant une position initiale et une position finale.

Dans un mode de réalisation, ledit piston est maintenu en position initiale par un ressort de piston et configuré pour avoir un déplacement progressif dudit piston jusqu'à la position finale.

Dans un mode de réalisation, la soupape calibrée est positionnée sur un manchon fileté comportant au moins un orifice de passage de l'eau, dans la position initiale le piston bouche l'orifice de passage de l'eau, dans la position finale le piston laisse passer l'eau par l'orifice de passage de l'eau.

La disposition de la soupape sur un manchon fileté comportant au moins un orifice de passage de l'eau permet une intégration compacte et efficace du dispositif de régulation de l'écoulement. Contrairement aux systèmes classiques où la soupape est indépendante ou positionnée en aval du circuit d'entrée, cette configuration intégrée simplifie la conception en limitant le nombre de composants nécessaires et en optimisant l'assemblage. Cela réduit les risques de fuites potentielles et améliore la fiabilité du mécanisme.

Le fait que le piston, dans sa position initiale, bouche l'orifice de passage de l'eau constitue une solution permettant de différer l'ouverture du circuit principal. Dans les dispositifs traditionnels, l'eau commence immédiatement à s'écouler dès l'activation de la chasse, ce qui entraîne une consommation simultanée d'eau entrant et sortant du réservoir. Ici, l'invention permet de maintenir le circuit fermé jusqu'à ce que la pression progressive exercée sur le piston entraîne son déplacement. Cette temporisation mécanique constitue un avantage majeur en termes d'économie d'eau, en évitant une surconsommation inutile lors du déclenchement de la chasse d'eau.

Lorsque le piston atteint sa position finale et libère l'orifice de passage de l'eau, l'alimentation du réservoir est alors autorisée avec un léger retard par rapport à l'ouverture du robinet d'entrée. Ce fonctionnement séquencé est inédit dans les systèmes de chasse d'eau classiques, où l'alimentation et l'évacuation se produisent simultanément. Grâce à cette caractéristique, l'invention permet une meilleure gestion du débit entrant, ce qui optimise le remplissage du réservoir sans engendrer de perturbations hydrauliques ni de fluctuations de pression susceptibles d'endommager le mécanisme.

Enfin, la combinaison du piston mobile et du manchon fileté perforé permet d'obtenir un système entièrement mécanique, ne nécessitant ni capteurs électroniques ni alimentation externe. Cette approche garantit une durabilité accrue, une maintenance simplifiée et une compatibilité avec une large gamme d'appareils sanitaires sans nécessiter de modifications complexes du circuit existant.

### Brève description des figures

D'autres avantages, buts et caractéristiques de la présente invention ressortent de la description qui suit, faite dans un but explicatif et nullement limitatif, en regard des dessins annexés, dans lesquels :
La figure 1 représente un appareil sanitaire équipé d'un mécanisme de chasse d'eau avec une vue zoomée du dispositif de temporisation de l'alimentation en eau ;
La figure 2 représente une vue en perspective du dispositif de temporisation d'alimentation en eau objet de la présente invention ;
La figure 3 représente une vue en coupe du dispositif de temporisation d'alimentation en eau objet de la présente invention ;
La figure 4 représente une vue en coupe de l'eau qui arrive dans le dispositif de temporisation d'alimentation en eau ;
La figure 5 représente une autre vue en coupe de l'eau qui arrive dans le dispositif de temporisation d'alimentation en eau ;
La figure 6 représente une autre vue en coupe de l'eau qui arrive dans le dispositif de temporisation d'alimentation en eau ;
La figure 7 représente une variante d'une vue en perspective du dispositif de temporisation d'alimentation en eau objet de la présente invention.

### Description des modes de réalisation

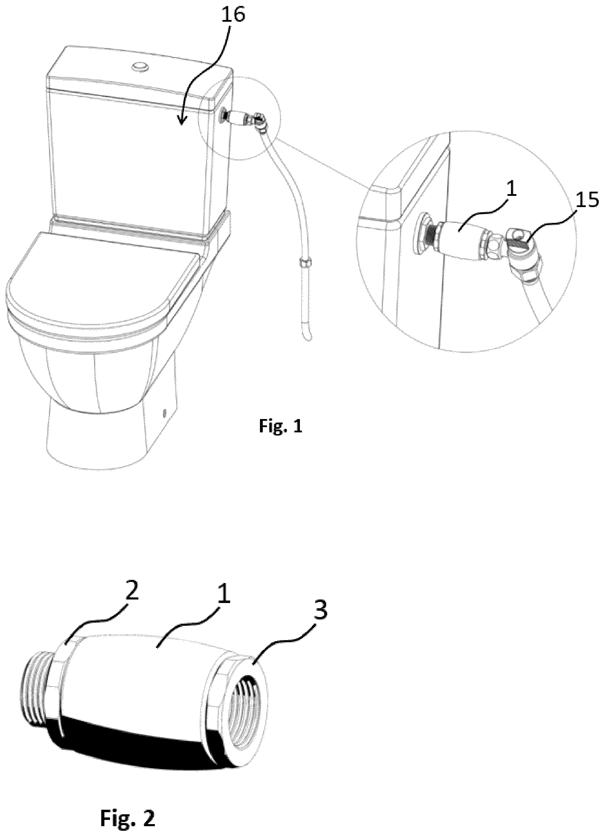

La figure 1 montre un appareil sanitaire équipé d'un mécanisme de chasse d'eau comprenant un réservoir 16 destiné à stocker l'eau nécessaire à l'évacuation des déchets. Le réservoir est alimenté en eau par un robinet d'arrêt 15, qui laisse passer l'eau après chaque activation de la chasse.

Entre le robinet d'arrêt 15 et le réservoir de chasse d'eau 16, est positionné le dispositif de temporisation de l'alimentation en eau, qui constitue l'objet de la présente invention. Ce dispositif de temporisation de l'alimentation en eau est conçu pour retarder l'ouverture du circuit principal d'alimentation en eau afin d'éviter le gaspillage d'eau et comporte un corps fileté 1.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

La figure 2 montre le dispositif de temporisation d'alimentation en eau. Il comporte un corps fileté 1 muni d'un raccord d'entrée fileté 2 et d'un raccord de sortie fileté 3, facilitant son agencement dans le circuit existant. À l'intérieur du dispositif, une série de composants assure son fonctionnement séquentiel.

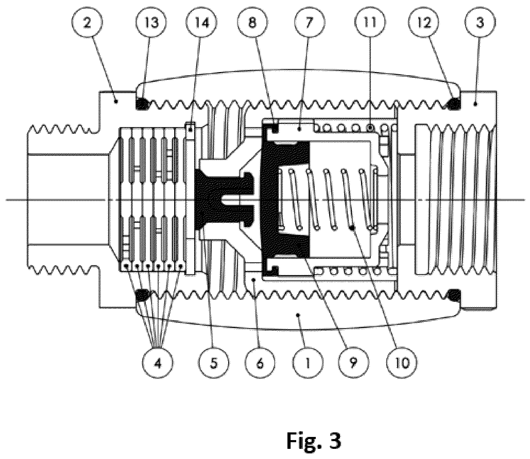

La figure 3 montre une vue en coupe du dispositif de temporisation d'alimentation en eau.

Cette figure montre les différents éléments en position initiale.

Le raccord d'entrée fileté 2 et le raccord de sortie fileté 3 sont reliés par le corps fileté 1.

Entre le raccord d'entrée fileté 2 et le corps fileté 1 est positionné un joint torique d'entrée 13.

Entre le raccord de sortie fileté 3 et le corps fileté 1 est positionné un joint torique sortie 12.

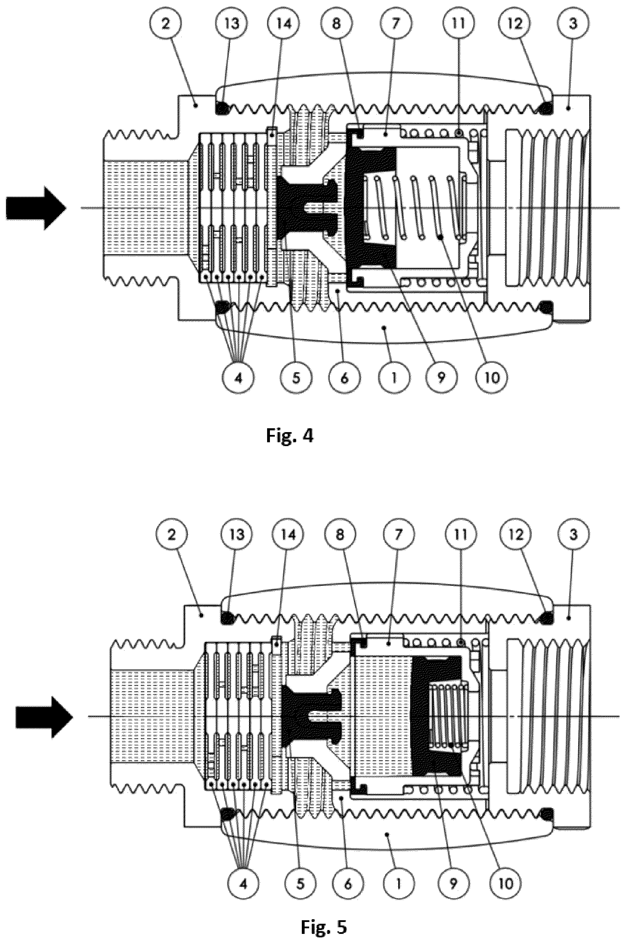

Les figures 4 à 6 montrent l'eau qui arrive dans le dispositif de temporisation d'alimentation en eau.

Au repos, l'eau est présente dans l'intégralité du système et les ressorts 10 et 11 repoussent le piston 9 et le clapet 7 en butée. Cela exerce un effort du joint de clapet 8 sur le ou les orifices du manchon fileté 6, ce qui ferme le circuit principal d'alimentation en eau.

Le manchon fileté 6 est relié au filetage du corps fileté 1.

Lorsque la chasse est activée, le robinet d'alimentation en eau qui fait partie du robinet flotteur laisse rentrer l'eau. Le robinet d'arrêt 15 laisse alors passer l'eau. Le système commence son fonctionnement. L'eau traverse une série de rondelles perforées 4 par plusieurs petits orifices, ce qui permet de réduire la vitesse de l'eau introduite dans le système.

Le robinet d'arrêt 15 sert seulement à fermer le circuit manuellement.

Chaque rondelle perforée 4 réduit la section de passage de l'eau. Techniquement, les rondelles servent à freiner la vitesse de l'eau et réduire la pression interne en agissant sur le cheminement de l'eau par le décalage des trous de passage.

Chaque rondelle perforée 4 comporte des trous. Les rondelles perforées 4 sont positionnées les unes à côté des autres de façon adjacente.

Dans une variante, les trous sont alignés, dans une autre variante les trous de chaque rondelle perforée 4 ne sont pas alignés.

La pluralité de rondelles perforées 4 est maintenue par un circlip d'arrêt interne 14.

Cette configuration permet d'améliorer la précision du temps de temporisation du dispositif. En contrôlant la vitesse d'entrée de l'eau, la rondelle perforée 4 agit en synergie avec la soupape calibrée 5 et les autres éléments internes du dispositif pour garantir un décalage temporel optimal entre l'ouverture de la vanne de sortie et celle du circuit principal d'alimentation en eau. Cette approche technique permet ainsi de supprimer ou de réduire significativement le chevauchement des ouvertures, réduisant ainsi la consommation d'eau inutile.

Ensuite, l'eau passe à travers une soupape calibrée 5 qui réduit le débit de passage à une très faible quantité d'eau. La soupape calibrée 5 réduit la section de passage de l'eau.

Le piston 9 est mobile en translation rectiligne selon l'axe longitudinal du dispositif.

La soupape calibrée 5 pousse le piston 9. Le piston 9 retenu par le ressort de piston 10 est alors lentement poussé par la faible quantité d'eau. Il faudra ainsi plusieurs secondes au piston 9 pour arriver en contact avec le clapet 7.

Une fois le piston 9 en butée, celui-ci exerce son effort sur le clapet 7 et comprime le ressort du clapet 11. Ce qui a pour effet de libérer le contact entre le joint de clapet 8 et les orifices du manchon fileté 6 et ainsi d'ouvrir le circuit principal d'eau et d'alimenter le réservoir de chasse d'eau 16.

Dès lors que le réservoir de chasse d'eau 16 est rempli, le flotteur désactive l'arrivée d'eau passant par le robinet d'arrêt 15 et l'ensemble du système revient en position initiale.

Les quelques secondes mises par le piston 9 pour ouvrir le dispositif permettent de différer l'alimentation en eau du réservoir 16, ce qui évite le gaspillage de plusieurs décilitres d'eau à chaque chasse.

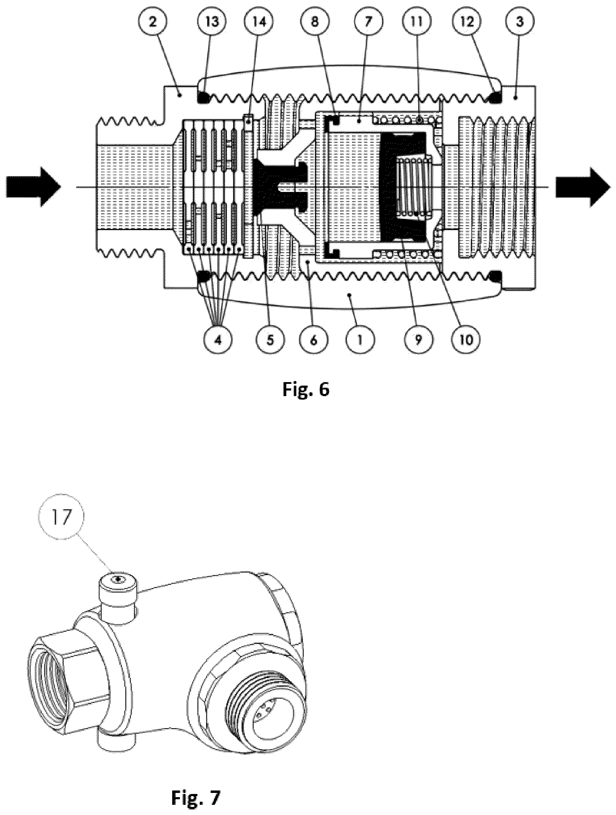

La figure 7 montre une variante.

Le dispositif de temporisation d'alimentation en eau comporte un bouton poussoir 17 ayant une position de fermeture configurée pour bloquer le passage de l'eau et une position d'ouverture configurée pour permettre le passage de l'eau. Il est possible d'avoir une position intermédiaire.

Lorsque le bouton poussoir est utilisé, le robinet d'arrêt 15 est remplacé. Le dispositif de temporisation d'alimentation en eau est directement relié à la canalisation d'alimentation en eau propre.

Il est souligné que toutes les caractéristiques, telles qu'elles se dégagent pour un homme du métier à partir de la présente description, des dessins et des caractéristiques attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'ait pas été expressément exclu ou que des circonstances techniques ne rendent de telles combinaisons impossibles ou dénuées de sens.

### LISTE DES SIGNES DE RÉFÉRENCE

**[Table 1]**

| Références | Désignations |
|---|---|
| 1 | Corps fileté |
| 2 | Raccord d'entrée fileté |
| 3 | Raccord de sortie fileté |
| 4 | Rondelle perforée |
| 5 | Soupape calibrée |
| 6 | Manchon fileté |
| 7 | Clapet |
| 8 | Joint de clapet |
| 9 | Piston |
| 10 | Ressort de piston |
| 11 | Ressort de clapet |
| 12 | Joint torique de sortie |
| 13 | Joint torique d'entrée |
| 14 | Circlips d'arrêt interne |
| 15 | Robinet d'arrêt |
| 16 | Réservoir de chasse d'eau |
| 17 | Bouton poussoir |

## Revendications

1. Ensemble de temporisation d'alimentation en eau pour réservoir de chasse d'eau d'un appareil sanitaire, comprenant une canalisation d'alimentation en eau propre reliée à un robinet d'arrêt (15) alimentant un réservoir de chasse d'eau (16) d'un appareil sanitaire comportant un mécanisme d'activation de la chasse d'eau, **caractérisé en ce qu'**il comporte : un dispositif de temporisation d'alimentation en eau positionné entre ledit robinet d'arrêt (15) et ledit réservoir de chasse d'eau (16), ledit dispositif de temporisation d'alimentation en eau comporte un élément configuré pour différer l'ouverture de l'alimentation en eau propre après activation de la chasse d'eau.

2. Ensemble selon la revendication 1, dans lequel ledit dispositif de temporisation d'alimentation en eau comporte un corps cylindrique avec un filetage mâle et un filetage femelle à chaque extrémité, une des extrémités comporte une entrée d'eau de canalisation d'eau propre et l'autre extrémité est une sortie d'eau reliée à l'eau du robinet d'arrêt (16).

3. Ensemble selon la revendication 1, dans lequel ledit corps cylindrique est un corps fileté (1), le filetage mâle est un raccord d'entrée fileté (2), le filetage femelle est un raccord de sortie fileté (3).

4. Ensemble selon la revendication 1, dans lequel ledit dispositif de temporisation d'alimentation en eau comporte au moins une rondelle perforée (4) configurée pour réduire la vitesse de l'eau introduite dans ledit dispositif.

5. Ensemble selon la revendication 4, dans lequel une pluralité de rondelles perforées (4) adjacentes étant positionnées les unes à côté des autres, chaque rondelle perforée (4) comporte une pluralité de trous, et chaque trou d'une rondelle perforée (4) n'étant pas aligné avec chaque trou de la rondelle adjacente.

6. Ensemble selon la revendication 1, dans lequel ledit dispositif de temporisation d'alimentation en eau comporte une soupape calibrée (5) configurée pour réduire le débit d'eau traversant ledit dispositif ; la soupape calibrée (5) est centrée par rapport à l'axe longitudinal dudit dispositif de temporisation d'alimentation en eau.

7. Ensemble selon la revendication 1, dans lequel ledit dispositif de temporisation d'alimentation en eau comporte un bouton poussoir (17) ayant une position de fermeture configurée pour bloquer le passage de l'eau et une position d'ouverture configurée pour laisser passer le passage de l'eau.

8. Ensemble selon la revendication 1, dans lequel ledit dispositif de temporisation d'alimentation en eau comporte un piston (9) actionné par la pression de l'eau et configuré pour réduire le débit d'eau traversant ledit dispositif, ledit piston (9) ayant une position initiale et une position finale.

9. Ensemble selon la revendication 8, dans lequel ledit piston (9) est maintenu en position initiale par un ressort de piston (10) et configuré pour avoir un déplacement progressif dudit piston (9) jusqu'à la position finale.

10. Ensemble selon les revendications 6 et 8, dans lequel la soupape calibrée (5) est positionnée sur un manchon fileté (6) comportant au moins un orifice de passage de l'eau, dans la position initiale le piston (9) bouche l'orifice de passage de l'eau, dans la position finale le piston (9) laisse passer l'eau par l'orifice de passage de l'eau.
